Europäisches Patentamt

European Patent Office

Office européen des brevets

(11) Publication number: **0 148 269 B1**

# EUROPEAN PATENT SPECIFICATION

(45) Date of publication of patent specification: **29.07.92**   (51) Int. Cl.5: **G05D 3/12**, H02P 5/34

(21) Application number: **84901013.7**

(22) Date of filing: **02.03.84**

(86) International application number:
**PCT/JP84/00083**

(87) International publication number:
**WO 84/03572 (13.09.84 84/22)**

(54) **SERVO DRIVING UNIT.**

(30) Priority: **04.03.83 JP 35633/83**

(43) Date of publication of application:
**17.07.85 Bulletin  85/29**

(45) Publication of the grant of the patent:
**29.07.92 Bulletin  92/31**

(84) Designated Contracting States:
**DE FR GB**

(56) References cited:
**EP-A- 0 070 654**
**JP-A- 5 720 809**
**JP-A-57 183 292**

(73) Proprietor: **FANUC LTD.**
**3580, Shibokusa Aza-Komanba, Oshino-mura**
**Minamitsuru-gun, Yamanashi 401-05(JP)**

(72) Inventor: **KURAKAKE, Mitsuo**
**Izumi-Haitsu 103 3-3-10, Tamadaira**
**Hino-shi Tokyo 191(JP)**
Inventor: **SAKAMOTO, Keiji**
**Fuyou-Haitsu 102 65-4, Takakura-cho**
**Hachioji-shi Tokyo 192(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

EP 0 148 269 B1

## Description

The present invention relates to a servomotor drive unit for servo-controlling a servomotor, and more particularly to a servomotor drive unit employing a microprocessor capable of controlling the servomotor. Such a drive unit is shown in EP 0 070 654 which describes a servomotor drive unit of a fixed configuration and using position and velocity commands.

Servomotors are widely used for moving and positioning objects in prescribed locations. For driving the servomotor, a servomotor drive circuit is required for servo-controlling the servomotor with a command from a numerical control apparatus or the like and a feedback signal indicative of a condition of the servomotor.

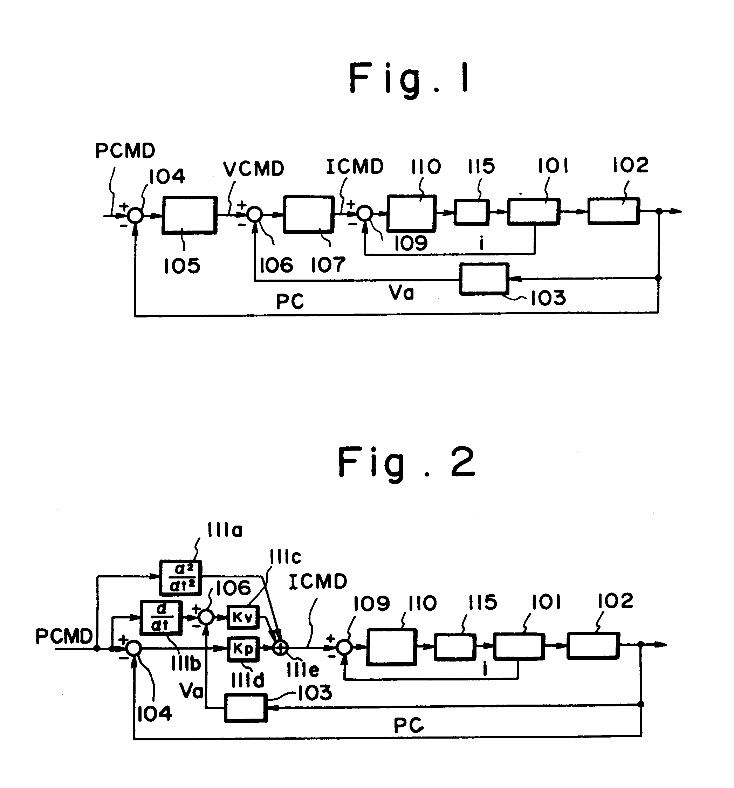

A servomotor control system is illustrated in the block diagram of Fig. 1 of the accompanying drawings. The servomotor control system receives a positional command PCMD from the numerical control apparatus or the like, and feeds back rotational pulses (pulses which are generated each time a servomotor 101 is angularly moved a prescribed angle) PC from a rotary encoder coupled to the shaft of the servomotor 101, and an armature current i flowing through the servomotor 101 for controlling a position, a speed, and a current. More specifically, the servomotor control system has an arithmetic unit 104 for calculating the difference between the positional command PCMD and the rotational pulses PC, and executes a prescribed positional loop calculation with a positional loop arithmetic unit 105 based on the calculated difference to issue a speed command VCMD. Then, the servomotor control system detects an actual speed Va of the servomotor 101 with a speed detection arithmetic unit 103 from a period of the rotational pulses PC. The difference between the speed command VCMD and the actual speed Va is calculated by an arithmetic unit 106, and a prescribed speed loop calculation is executed by a speed loop arithmetic unit 107 based on the calculated difference to produce a current command ICMD. Then, the difference between an actual current of the servomotor 101 and the current command ICMD is calculated by an arithmetic unit 109, and a prescribed current loop calculation is executed by a current loop arithmetic unit 110 based on the calculated difference to produce an inverter drive signal. An inverter 115 which is a power amplifier amplifies the inverter drive signal into a prescribed armature current and supplies the armature current to the servomotor 101. The servomotor 101 is thus servo-controlled, and such servo-control requires positional loop control, speed loop control, and current loop control.

The servomotors are used in a variety of applications. Various modes of controlling the servomotors have been developed to meet required functions of devices in which they are incorporated, and are becoming complex. For example, the mode of controlling a controlled object to move toward a target position is different from the mode of controlling the path and speed of an object while it moves toward a target position.

Fig. 2 is a block diagram illustrative of a control mode in which a positional control loop and a speed control loop are combined.

In the illustrated control mode, a positional command PCMD is differentiated by a differentiator 111b to produce a speed command, the difference between the speed command and an actual speed is calculated by an arithmetic unit 106, the calculated difference is multiplied by a speed gain Kv with a multiplier 11c, and the product is applied to an adder 111e. The difference between the positional command PCMD and rotational pulses PC is calculated by an arithmetic unit 104, the calculated difference is multiplied by a positional gain Kp with a multiplier 111d, and the product is applied to the adder 111e. The adder 111e is also supplied with an acceleration produced by twice differentiating the positional command PCMD with a differentiator 111a. Therefore, the adder 111e adds the positional command, the speed command, and the acceleration command to produce a current command ICMD.

The above control mode enables the object to follow a desired path accurately with a small error, and is suitable for application to robotics.

Where various control modes are present, however, it is difficult to employ servomotor drive units of the same hardware construction, and servomotor drive units of different hardware constructions matching desired control modes have to be used.

Furthermore, servo-control required by a servomotor drive unit may be only current loop control, or current and speed loop control, or current, speed, and positional loop control. This also makes it difficult to share one servomotor drive unit with different control modes.

The servomotor drive units have therefore been difficult to mass-produce, and could not be manufactured less costly.

Accordingly, it is an object of the present invention to provide a servomotor drive unit having a hardware arrangement sharable by various control modes.

Disclosure of the Invention

According to the present invention, there is provided a servomotor drive unit including a voltage supply circuit for supplying an armature voltage to a servomotor, a current detector for detecting the armature current in the servomotor, a rotational angle detector for detecting the rotational angle of the servomotor, and an arithmetic controller having a memory for storing a motor control program, an interface circuit for receiving external commands, and a processor connected to the rotational angle detector and responsive to commands supplied from the said interface circuit for executing the motor control program to control the current supplied from said voltage supply circuit, characterised in that the current detector is likewise connected to the processor and the arrangement is such that the servomotor drive unit can follow any of a positional command, a speed command, and a current command received through the said interface circuit, by virtue of a motor control program which is stored in the memory for carrying out by the processor, the program defining a predetermined series of processor steps which is: such as to enable the servomotor drive unit to follow said positional command; such as to enable the servomotor drive unit to follow said speed command if an initial number of the predetermined series of processor steps is omitted; and such as to enable the servomotor drive unit to follow said current command if said initial number, together with more, of the predetermined series of processor steps are omitted; whereby a single motor control program can be modified to provide all of positional command control, speed command control and current command control.

Therefore, the servomotor drive unit can effect a variety of servo-control modes with a single hardware arrangement simply by modifying the control program to meet the control modes.

The servomotor drive unit of the invention can be shared by different control modes, and hence can be mass-produced at a large cost reduction.

The servomotor drive unit is of the same hardware arrangement regardless of different control modes. Accordingly, maintenance parts may be reduced in number, and it is not necessary to stock maintenance parts suited for individual control modes. Any repair or servicing of the servomotor drive unit at the time the same has a trouble or is serviced is simplified.

Brief Description of the Drawings

Fig. 1 is a block diagram of a general servomotor control system;
Fig. 2 is a block diagram of another servomotor control system;
Fig. 3 is a diagram explanatory of the principle of the present invention; and
Fig. 4 is a block diagram of an embodiment of the present invention.
The present invention will be described in greater detail with reference to the accompanying drawings.

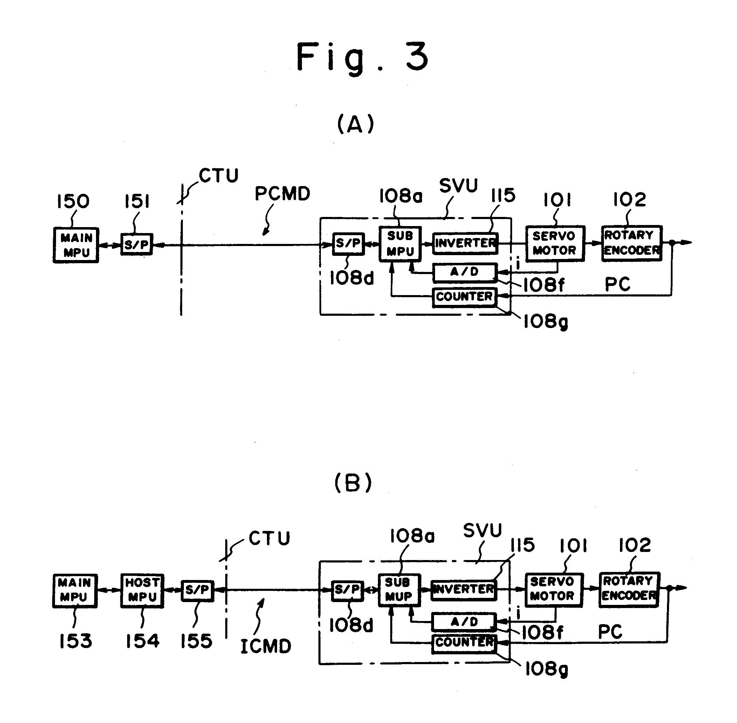

Fig. 3 is a diagram explanatory of the principle of the present invention. Fig. 3(A) shows a positional command interface, and Fig. 3(B) shows a current command interface.

Designated at SVU is a servomotor drive unit composed of an arithmetic controller having a microprocessor 108a, an interface circuit 108d, a counter 108g, an analog-to-digital converter (AD converter) 108f, and an inverter (voltage supply circuit) 115. In Fig. 3(A), the servomotor drive unit SVU effects positional, speed, and current control loop calculations dependent on a positional command PCMD fed through an interface circuit 151 from a main processor 150 in a controller CTU of a numerical control apparatus, for thereby servo-controlling a servomotor 101. In Fig. 3(B), a host processor 154 is responsive to a positional command from a main procssor 153 in a controller CTU for effecting positional and speed control loop calculations combined as shown in Fig. 2, for example, to produce a current command ICMD. The current command ICMD is fed through an interface circuit 155 to the servomotor drive unit SVU which executes a current control loop calculation for servo-controlling the servomotor 101.

With the servomotor drive unit SVU constructed only of the arithmetic controller and the voltage supply circuit, any input of the positional command PCMD, the speed command VCMD, and the current command ICMD can be followed simply by modifying a control program for the arithmetic controller. Therefore, the hardware of the servomotor drive unit can be shared.

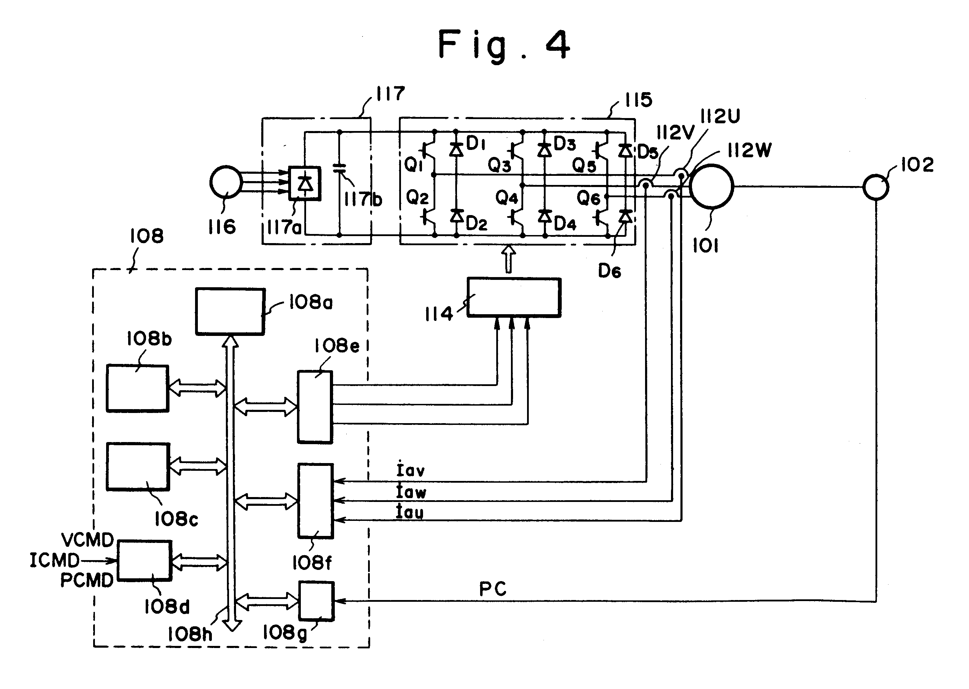

An embodiment of the present invention will be described hereinbelow. Fig. 4 is a diagram showing an embodiment of the present invention, in which a servomotor comprises a synchronous motor.

Identical parts in Fig. 4 are denoted by identical reference characters in Fig. 3.

A servomotor 101 comprising a synchronous motor is supplied with DC voltages produced by rectifying three-phase alternating currents from a three-phase AC power supply with a rectifier circuit 117. The servomotor 101 is servo-controlled by drive signals supplied from an inverter (voltage supply circuit) 115 controlled by a control signal issued through a timer circuit 114 from an arithmetic controller 108.

The arithmetic controller 108 is composed of a processor 108a for effecting arithmetic operations according to a motor control program, a program memory 108b for storing the motor control program, a

EP 0 148 269 B1

data memory 108c for storing data, an interface circuit 108d for receiving commands from an external source such as a numerical control apparatus, an input/output port 108e for issuing a pulse-width-modulation command to a timer circuit 114, an analog-to-digital (AD) converter 108f for converting actual phase currents $\dot{i}au$, $\dot{i}av$, $\dot{i}aw$ from current detectors 112U, 112V, 112W, described later, into digital values, a counter 108g for being initially loaded with a positional code indicative of a rotational position $\alpha$ of the field pole of the synchronous motor 101 and for counting rotational pulses PC generated from the pulse coder 102 each time the synchronous motor 101 is angularly moved a predetermined angle, and an address/data bus 108h connecting the above components.

The current detectors 112U, 112V, 112W detect the actual phase currents $\dot{i}av$, $\dot{i}aw$, $\dot{i}au$ of the phases and supply the current signals to the AD converter 108f in the arithmetic controller 108.

The timer circuit 114 issues a pulse-width-modulation signal having a width or duration dependent on a pulse-width-modulation command from the arithmetic controller 108 to the inverter 115.

The inverter 115 is composed of six power transistors $Q_1$ - $Q_6$ and six diodes $D_1$ - $D_6$. The power transistors $Q_1$ - $Q_6$ are turned on and off by the pulse-width-modulation signal from the timer circuit 114 for giving drive currents to the synchronous motor 101.

A rectifier circuit 117 is composed of a diode group 117a and a capacitor 117b for rectifying three-phase alternating currents from the three-phase AC power supply 116 into direct currents to impress a DC voltage on the inverter 115.

Operation of the servomotor drive unit shown in Fig. 4 will be described. First, a mode in which the servomotor drive unit is used with a positional command interface will be described.

When the synchronous motor 101 is rotated, the counter 108g in the arithmetic controller 108 has been loaded with a positional code from the pulse coder 102 immediately before the synchronous motor 101 starts rotating, and has been counting rotational pulses PC generated as the synchronous motor 101 rotates. Therefore, the counter 108g is indicative of the rotational position of a field pole of the synchronous motor 101 and represents an interval of movement. Since the period of the rotational pulses PC is proportional to the speed of the synchronous motor 101, increments in the count of the counter 108g in a prescribed time interval correspond to the rotational speed of the synchronous motor 101.

(1) For moving the synchronous motor 101 to a desired position, the arithmetic controller 108 receives a positional command PCMD from a numerical control apparatus or the like through the interface circuit 108d, which delivers the positional command PCMD through the address/data bus 108h to the processor 108a.

(2) The processor 108a reads a count from the counter 108g through the address/data bus 108h, calculates the difference between a count at a previous sampling time and the present count, and calculates an interval of movement PAD from the calculated difference. (The step of calculating an interval of movement)

(3) The processor 108a effects the following arithmetic operation using the positional command PCMD and the interval of movement PAD to determine a speed command Vc (VCMD):

Vc = Kp (PCMD - PAD)     (1)

where Kp is a positional loop gain which is a constant. (The step of calculating a command speed)

(4) Then, the processor 108a reads a count from the counter 108g through the address/data bus 108h. The processor 108a then calculates the difference between a previous count and the present count, divides the difference by a sampling period T to determine an actual speed Va. The actual speed Va may be calculated by providing a counter which measures the periods of the rotational pulses PC and causing the processor 108a to reach the counter. (The step of calculating an actual speed)

(5) The processor 108a effects the following arithmetic operation using the speed command Vc and the actual speed Va to determine an amplitude command (effective current command) Ir:

$$ \mathrm{Ir} = \mathrm{K}_1\ (\mathrm{Vc} - \mathrm{Va}) + \mathrm{K}_2 \sum_{i=1}^{k-1} (\mathrm{Vc} - \mathrm{Va}) \qquad \ldots (2) $$

Ir in the equation (17) corresponds to the amplitude of an armature current. As Ir is increased, a greater torque is produced, and the actual speed of the synchronous motor 101 is thereby brought to the command speed. (The step of calculating the speed loop)

(6) Then, the processor 108a reads a count $\theta$ from the counter 108g through the address/data bus 108h. The processor 108a search a conversion table of count values $\theta$ - sin $\theta$, sin ($\theta$ + 2/3$\pi$) stored in the data

4

memory 108c and obtains digital values of sin $\theta$, sin ($\theta$ + 2/3$\pi$) corresponding to the rotational angle $\theta$. (The step of generating a sine wave)

(7) The processor 108a multiplies the amplitude command Ir determined in the speed loop calculating step (5) and the digital values of sin $\theta$, sin ($\theta$ + 2/(3$\pi$)) to obtain two-phase current commands $I_R$, $I_S$:

$$I_R = Ir \cdot \sin \theta$$
$$I_S = Ir \cdot \sin (\theta + 2/3\pi) \qquad \ldots(3)$$

Then, the processor 108a derives a current command $I_T$ from the two-phase current commands $I_R$, $I_S$ according to the following equation:

$$I_T = -I_R - I_S$$
$$= Ir \cdot \sin (\theta + 4/3\pi) \qquad \ldots(4)$$

(The step of calculating a current command)

If a conversion table of $\theta$ - sin $\theta$, sin ($\theta$ + 2/3$\pi$), sin ($\theta$ + 4/3$\pi$) is employed in the sine wave generating step (6), then the arithmetic operation of the equation (4) is unnecessary.

(8) Then, the processor 108a reads, through the bus 108h, digital values converted by the AD converter 108f from the actual phase currents $\dot{I}av$, $\dot{I}aw$, $\dot{I}au$ detected by the current detector 112U, 112V, 112W, and determines the differences bewteen the three-phase current commands $I_R$, $I_S$, $I_T$ and the actual phase currents Iav, Iaw, Iau to produce inverter drive signals. (The step of calculating drive signals)

(9) Thereafter, the processor 108a multiplies the actual speed Va obtained in the speed loop calculating step (4) by a prescribed coefficient to produce a speed compensation output $V\overline{CO}$, and subtracts the speed compensation output $V\overline{CO}$ from the inverter drive signals to produce compensated inverter drive signals. The current loop is thus prevented from a gain reduction which would otherwise be caused by a counterelectromotive force due to the actual speed Va of the sychronous motor 101. (The step of compensating the current loop)

(10) The processor 108a then generates pulse-width-modulation commands from the values of the inverter command signals. That is, the processor 108a calculates the pulse-width-modulation commands indicative of pulse widths dependent on the corrected inverter drive signals. (The step of pulse-width-modulation)

(11) The processor 108a delivers the pulse-width-modulation commands through the address/data bus 108h and the input/output port 108e to the timer circuit 114. (The step of delivering commands)

The timer circuit 114 issues pulse-width-modulation signals having time durations dependent on the pulse-width-modulation commands to the power transistors $Q_1$ - $Q_6$ of the inverter 115 for controlling three-phase currents fed to the synchronous motor 101.

The processor 108a executes the current loop calculations in the steps (5) - (11) in each sampling period T and also executes the speed loop calculations in the steps (1) - (5) in each period nT (n > 1) according to the control program in the program memory 108b for controlling the inverter 115 to rotate the synchronous motor 101 to at a command speed.

Where the servomotor drive unit is used with the positional command interface, a motor control program may be stored in the program memory 108b for enabling the processor 108a to execute the steps (1) - (11).

The speed command interface will be described. In the speed command interface, the speed command VCMD is supplied through the interface circuit 108d. Since the supplied speed command VCMD is the speed command Vc determined in the step (3), the processor 108a may execute the steps (4) - (11) on the speed command VCMD. Therefore, a motor control program may be stored in the program memory 108b for enabling the processor 108a to execute the steps (4) - (11).

In the current command interface, the current command ICMD is supplied through the interface circuit 108d. Since the supplied current command ICMD is the effective current command Ir determined in the step (5), the processor 108a may execute the steps (6) - (11) on the supplied current command ICMD. Therefore, a motor control program may be stored in the program memory 108b for enabling the processor 108a to execute the steps (6) - (11).

The program ((1) - (3)) for calculating the positional control loop may be of another control type, and likewise the programs for calculating the speed and current control loops may be of other control types.

Although the synchronous motor has been described in the above embodiment, the motor may be an induction motor or a DC motor.

The servomotor drive unit of the present invention can effect a variety of control modes with one hardware arrangement including a microprocessor simply by modifying a motor control program to meet a control mode. The servomotor drive unit is suitable for use with robots and machine tools controlled by numerical control apparatus.

**Claims**

1. A servomotor drive unit including a voltage supply circuit (115) for supplying an armature voltage to a servomotor (101), a current detector (112) for detecting the armature current in the servomotor (101), a rotational angle detector (102) for detecting the rotational angle of the servomotor (101), and an arithmetic controller (108) having a memory (108b) for storing a motor control program, an interface circuit (108d) for receiving external commands, and a processor (108a) connected to the rotational angle detector (102) and responsive to commands supplied from the said interface circuit (108d) for executing the motor control program to control the current supplied from said voltage supply circuit (115), characterised in that the current detector (112) is likewise connected to the processor (108a) and the arrangement is such that the servomotor drive unit can follow any of a positional command (PCMD), a speed command (VCMD), and a current command (ICMD) received through the said interface circuit (108d), by virtue of a motor control program which is stored in the memory (108b) for carrying out by the processor (108a), the program defining a predetermined series of processor steps which is: such as to enable the servomotor drive unit to follow said positional command (PCMD); such as to enable the servomotor drive unit to follow said speed command (VCMD) if an initial number of the predetermined series of processor steps is omitted; and such as to enable the servomotor drive unit to follow said current command (ICMD) if said initial number, together with more, of the predetermined series of processor steps are omitted; whereby a single motor control program can be modified to provide all of positional command control, speed command control and current command control.

2. A servomotor drive unit according to claim 1, wherein said predetermined series of processor steps defined by the motor control program is as follows:

(1) a first processor step of receiving a positional command PCMD from a numerical control apparatus or the like through the interface circuit (108d);

(2) a second processor step of calculating an interval of movement PAD in dependence upon the rotational angle detector (102);

(3) a third processor step of calculating a command speed Vc from the expression

$$Vc = Kp \ (PCMD-PAD)$$

where Kp is a constant positional loop gain;

(4) a fourth processor step of calculating an actual speed Va by dividing an interval of movement by a corresponding sampling period T;

(5) a fifth processor step of determining an armature current amplitude command Ir from the expression

$$Ir = K_1 \ (Vc-Va) + K_2 \sum_{i=1}^{K-1} (Vc-Va)$$

(6) a sixth processor step of generating digital waves from a conversion table in dependence upon the rotational angle $\theta$ detected in dependence upon the rotational angle detector (102);

(7) a seventh processor step of deriving three-phase armature current commands $I_R$, $I_S$, $I_T$ employing the current amplitude command $I_r$ and said digital sine waves;

(8) an eighth processor step of calculating drive signals for the voltage supply circuit (115) in dependence upon the differences between said three-phase armature current commands $I_R$, $I_S$, $I_T$ and the actual three-phase armature currents Iav, Iaw, Iau detected by said current detector (112);

(9) a ninth processor step of compensating the current loop control by subtracting from said drive signals a speed compensation output VCO obtained by multiplying said actual speed Va by a prescribed coefficient, thereby to avoid a current loop gain reduction which would otherwise be caused by a counterelectromotive force due to the actual speed Va;

(10) a tenth processor step of generating pulse-width-modulation commands for the voltage supply circuit (115) from the compensated drive signals; and

(11) an eleventh processor step of delivering the pulse-width-modulation commands to the voltage supply circuit (115),

and wherein all the eleven processor steps will be executed to enable the servomotor drive unit to follow said positional command (PCMD) received through the said interface circuit (108d);

the first three processor steps will be omitted to enable the servomotor drive unit to follow a speed command received through the said interface circuit (108d); and

the first five processor steps will be omitted to enable the servomotor drive unit to follow a current command received through the said interface circuit (108d).

**Revendications**

1. Une unité d'entraînement de servomoteur comprenant un circuit d'alimentation en tension (115) pour fournir une tension d'induit à un servomoteur (101), un détecteur de courant (112) pour détecter le courant d'induit dans le servomoteur (101), un détecteur d'angle de rotation (102) pour détecter l'angle de rotation du servomoteur (101), et une unité de commande arithmétique (108) comportant une mémoire (108b) pour mémoriser un programme de commande de moteur, un circuit d'interface (108d) pour recevoir des instructions externes, et un processeur (108a) connecté au détecteur d'angle de rotation (102) et réagissant aux instructions fournies à partir dudit circuit d'interface (108d) pour exécuter le programme de commande de moteur pour commander le courant délivré à partir dudit circuit d'alimentation en tension (115), caractérisé en ce que le détecteur de courant (112) est de même connecté au processeur (108a) et en ce que l'agencement est tel que l'unité d'entraînement de servomoteur peut suivre l'une quelconque d'une instruction de position (PCMD), d'une instruction de vitesse (VCMD), et d'une instruction de courant (ICMD) reçue par l'intermédiaire dudit circuit d'interface (108d), grâce à un programme de commande de moteur qui est mémorisé dans la mémoire (108b) pour exécution par le processeur (108a), le programme définissant une série prédéterminée d'étapes de traitement qui : telle qu'elle permette à l'unité d'entraînement de servomoteur de suivre ladite instruction de position (PCMD) ; telle qu'elle permette à l'unité d'entraînement de servomoteur de suivre ladite instruction de vitesse (VCMD) si un certain nombre initial de la série prédéterminée des étapes de traitement est omis, et telle qu'elle permette à l'unité d'entraînement de servomoteur de suivre ladite instruction de courant (ICMD) si ledit nombre initial, avec d'autres, de la série prédéterminée d'étapes de traitement sont omises ; ce par quoi un proramme unique de commande de moteur peut être modifié pour fournir la totalité de la commande d'instruction de position, de la commande d'instruction de vitesse et de la commande d'instruction de courant.

2. Une unité d'entraînement de servomoteur selon la revendication 1, dans laquelle ladite série prédéterminée d'étapes de traitement définie par le programme de commande de moteur est la suivante :

(1) une première étape de traitement consistant à recevoir une instruction de position PCMD issue d'un dispositif à commande numérique ou analogue par l'intermédiaire du circuit d'interface (108d) ;

(2) une deuxième étape de traitement consistant à calculer un intervalle de déplacement PAD en fonction du détecteur d'angle de rotation (102) ;

(3) une troisième étape de traitement consistant à calculer une vitesse d'instruction Vc à partir de l'expression

$$Vc = Kp (PCMD - PAD)$$

dans laquelle Kp est un gain de boucle de position constant ;

(4) une quatrième étape de traitement consistant à calculer une vitesse réelle Va en divisant un intervalle de déplacement par une période d'échantillonnage correspondante T ;

(5) une cinquième étape de traitement consistant à déterminer une instruction d'amplitude de courant d'induit Ir à partir de l'expression

$$Ir = K1 \ (Vc - Va) + K2 \sum_{i=1}^{K-1} (Vc - Va)$$

(6) une sixième étape de traitement consistant à produire des ondes numériques à partir d'une table de conversion en fonction de l'angle de rotation $\theta$ détecté en fonction du détecteur d'angle de rotation (102) ;

(7) une septième étape de traitement consistant à obtenir des instructions de courants d'induit triphasés $I_R$, $I_S$, $I_T$ utilisant l'instruction d'amplitude de courant Ir et lesdites ondes sinusoïdales numériques ;

(8) une huitième étape de traitement consistant à calculer des signaux de pilotage pour le circuit d'alimentation en tension (115) en fonction des différences entre lesdites instructions de courants d'induit triphasés IR, IS, IT et les courants d'induit triphasés réels $\dot{I}av$, $\dot{I}aw$, $\dot{I}au$ détectés par ledit détecteur de courant (112) ;

(9) une neuvième étape de traitement consistant à compenser la commande de boucle de courant par soustraction desdits signaux de pilotage d'une sortie de compensation de vitesse $VC\overline{O}$ obtenue en multipliant ladite vitesse réelle Va par un coefficient prédéterminé, en évitant par ce moyen une réduction du gain de boucle de courant qui autrement serait provoqué par une force contre électromotrice due à la vitesse réelle Va ;

(10) une dixième étape de traitement consistant à produire des instructions de modulation d'impulsions en largeur pour le circuit d'alimentation en tension (115) à partir des signaux de pilotage composés ; et

(11) une onzième étape de traitement consistant à délivrer des instructions de modulation d'impulsions en largeur au circuit d'alimentation en tension (115),

et dans laquelle la totalité des onze étapes de traitement seront exécutées pour permettre à l'unité d'entraînement de servomoteur de suivre ladite instruction de position PCMD reçue par l'intermédiaire dudit circuit d'interface (108d) ;

les trois premières étapes de traitement seront omises pour permettre à l'unité d'entraînement de servomoteur de suivre une instruction de vitesse reçue par l'intermédiaire dudit circuit d'interface (108d) ; et

les cinq premières étapes de traitement seront omises pour permettre à l'unité d'entraînement de servomoteur de suivre une instruction de courant reçue par l'intermédiaire dudit circuit d'interface (108d).

## Patentansprüche

1. Antriebseinheit für einen Servormotor mit einer Schaltung (115) zur Spannungsversorgung zur Versorgung eines Servomotors (101) mit einer Ankerspannung, einem Stromdetektor (112) zur Detektierung des Ankerstromes des Servomotors (101), einem Detektor (102) für den Rotations-Winkel zur Steuerung des Rotations-Winkels des Servomotors (101) und einer arithmetischen Steuerung (108), die einen Speicher (108b) zur Speicherung eines Motorsteuerungsprogramms aufweist, einer Schnittstellenschaltung (108d) zum Empfang externer Befehle, und einem Prozessor (108a), der mit dem Rotations-Winkeldetektor (102) verbunden ist und Befehlen gehorcht, die von der genannten Schnittstellenschaltung (108d) geliefert werden, um das Motorsteuerungsprogramm zur Steuerung des Stromes, das von der Spannungsversorgungsschaltung (115) geliefert wird, auszuführen,

   **dadurch gekennzeichnet,** daß der Stromdetektor (112) ebenso mit dem Prozessor (108a) verbunden ist, und die Anordnung so ist, daß die Ansteuereinheit für den Servomotor irgendeinem von einem Positionsbefehl (PCMD), einem Geschwindigkeitsbefehl (VCMD) und einem Strombefehl (ICMD) folgen kann, der durch die genannte Schnittstellenschaltung (108d) empfangen wurde, dank eines Motorsteuerungsprogramms, welches im Speicher (108d) gespeichert ist, um durch den Prozessor (108a) ausgeführt zu werden, wobei das Programm eine vorbestimmte Serie von Verarbeitungsschritten bestimmt, welche sind: Ermöglichung für die Ansteuereinheit für den Servomotor, dem genannten Positionsbefehl (PCMD) zu folgen; Ermöglichung für die Ansteuereinheit für den Servomotor dem genannten Geschwindigkeitsbefehl (VCMD) zu folgen, wenn eine Anfangszahl von vorbestimmten Serien von Verarbeitungsschritten ausgelassen wird; und Ermöglichung für die Ansteuereinheit für den Servomotor dem Strom-Befehl (ICMD) zu folgen, wenn die genannte Anfangszahl, zusammen mit mehreren der vorbestimmten Serien von Verarbeitungsschritten ausgelassen wird;

wodurch ein einziges Motorsteuerungsprogramm modifiziert werden kann, um die Steuerung für den Positionsbefehl, für den Geschwindigkeitsbefehl und den Strombefehl zu besorgen.

2. Antriebseinheit für einen Servomotor nach Anspruch 1, wobei die vorbestimmten Serien von Verarbeitungsschritten, bestimmt durch das Motorsteuerungsprogramm, folgendermaßen sind:

(1) ein erster Verarbeitungsschritt zum Empfang eines Positionsbefehls PCMD von einer numerischen Steuereinrichtung oder dergleichen durch die Schnittstellenschaltung (108d);

(2) ein zweiter Verarbeitungsschritt zur Berechnung eines Intervalls der Bewegung PAD in Abhängigkeit des Rotations-Winkeldetektors (102);

(3) ein dritter Verarbeitungsschritt zur Berechnung einer Befehlsgeschwindigkeit Vc aus dem Ausdruck

$$Vc = Kp \, (PCMD\text{-}PAD)$$

wobei Kp eine konstante Positions-Schleifenverstärkung ist;

(4) ein vierter Verarbeitungsschritt zur Berechnung der aktuellen Geschwindigkeit Va durch Teilung eines Intervalles der Bewegung durch eine korrespondierende Abtastperiode T;

(5) ein fünfter Verarbeitungsschritt zur Bestimmung eines Befehls Ir für die Amplitude des Ankerstromes aus dem Ausdruck

$$Ir = K_1 \, (Vc\text{-}Va) + K_2 \sum_{i=1}^{K-1} (Vc\text{-}Va)$$

(6) ein sechster Verarbeitungsschritt zur Erzeugung digitaler Wellen aus einer Umwandlungstabelle in Abhängigkeit von dem Rotationswinkel $\theta$, der in Abhängigkeit des Rotations-Winkeldetektors (102) detektiert wird;

(7) ein siebter Verarbeitungsschritt zur Bildung von Dreiphasen-Ankerstrom-Befehlen $I_R$, $I_S$, $I_T$, die den Stromamplitudenbefehl $I_r$ und die genannten digitalen Sinuswellen verwenden;

(8) ein achter Verarbeitungsschritt zur Berechnung der Ansteuersignale für die Spannungsversorgungsschaltung (115) in Abhängigkeit von den Unterschieden zwischen den genannten Dreiphasen-Ankerstrombefehlen $I_R$, $I_S$, $I_T$ und den aktuellen Dreiphasen-Ankerströmen Iav, Iaw, Iau, die von dem genannten Stromdetektor (112) ermittelt wurden.

(9) ein neunter Verarbeitungsschritt zur Kompensation der Schleifenstromsteuerung durch Subtrahierung eines Geschwindigkeits-Kompensationsausgangs VCO von den genannten Ansteuersignalen, der erreicht wird durch Multiplizieren der aktuellen Geschwindigkeit Va mit einem vorgeschriebenen Koeffizienten, um so eine Reduzierung der Schleifenstromverstärkung zu vermeiden, welche andernfalls durch eine gegenelektromotorische Kraft aufgrund der aktuellen Geschwindigkeit Va verursacht würde;

(10) ein zehnter Vearbeitungsschritt zur Erzeugung von Puls-Weiten-Modulationsbefehlen für die Spannungsversorgungsschaltung (115) von den kompensierten Ansteuersignalen; und

(11) ein elfter Verarbeitungsschritt, der Puls-Weiten-Modulationsbefehle zur Spannungsversorgungsschaltung (115) liefert, und

wobei alle elf Verarbeitungsschritte ausgeführt werden, um es der Ansteuereinrichtung für den Servomotor zu ermöglichen, dem genannten Positionsbefehl (PCMD) zu folgen, der durch die genannte Schnittstellenschaltung (108d) empfangen wurde;

daß die ersten drei Verarbeitungsschritte ausgelassen werden, um es der Ansteuereinheit für den Servomotor zu ermöglichen, einem Geschwindigkeits-Befehl zu folgen, der durch die genannte Schnittstellenschaltung (108d) empfangen wurde; und

die ersten fünf Verarbeitungsschritte ausgelassen werden, um es der Ansteuereinheit für den Servomotor zu ermöglichen, einem Strombefehl zu folgen, der durch die genannte Schnittstellenschaltung (108d) empfangen wurde.

EP 0 148 269 B1

# Fig. 1

# Fig. 2

# Fig. 3

## (A)

## (B)

Fig. 4